# FASCICULE DE BREVET EUROPEEN

(11) **EP 0 580 464 B1**
(45) Date de publication et mention de la délivrance du brevet: **27.11.1996**
(21) Numéro de dépôt: 93401543.9
(22) Date de dépôt: 16.06.1993
(51) Int. Cl.: F16P 3/08

(54) **Dispositif de verrouillage d'un carter et machine comportant un tel dispositif**
Sperrvorrichtung für Gehäuse und Machine mit einer solchen Vorrichtung
Locking device for a casing and machine with such device

(30) Priorité: 19.06.1992 FR 9207508
(43) Date de publication de la demande: 26.01.1994
(73) Titulaire: MATERIEL ET OUTILLAGE RATIONNELS POUR L'INDUSTRIE (Société Anonyme), 91670 Angerville (FR)
(72) Inventeur: Fourcault, Serge, F-91410 Dourdan (FR)
(74) Mandataire: Keib, Gérard

(56) Documents cités:
- DE-A- 3 919 458
- DE-C- 112 188
- GB-A- 2 780
- US-A- 4 319 146

## Description

La présente invention concerne un dispositif de verrouillage d'un carter empêchant temporairement l'accès à des parties dangereuses d'une machine.

L'invention vise en particulier à créer un dispositif de verrouillage qui condamne l'ouverture du carter par l'utilisateur tant que les pièces de la machine protégées par le carter sont en mouvement.

Un carter possède généralement un système de fermeture, tel qu'un pêne solidaire du carter qui s'engage dans une gâche.

Un tel système de fermeture n'empêche pas l'utilisateur de mettre en marche la machine sans avoir au préalable fermé le carter, ni d'ouvrir le carter lorsque la machine est en marche.

Des solutions ont été proposées afin d'empêcher la mise en marche de la machine tant que le carter de protection reste ouvert.

Ainsi un moyen de détection de la position du système de fermeture du carter peut être ajouté afin de court-circuiter la commande de mise en marche de la machine si le carter est resté ouvert.

Cependant, un tel système n'empêche pas l'utilisateur d'ouvrir le carter lorsque la machine est en marche et d'avoir accès à des pièces dangereuses de la machine, telles que des pièces en mouvement par exemple.

US-A-4 319 146 décrit un dispositif de verrouillage d'un carter comportant un moyen de fermeture du carter, un moyen de verrouillage permettant de condamner l'ouverture du carter et un détecteur de la position du carter adapté à court-circuiter la commande de mise en marche de la machine lorsque le carter est ouvert, un détecteur de l'état de verrouillage étant adapté à court-circuiter la commande de mise en marche de la machine lorsque le carter est déverrouillé et le moyen de verrouillage étant commandé par au moins un électro-aimant dont les impulsions sont consécutives à la commande de mise en marche en aval du détecteur de position du carter ou à la commande d'arrêt de la machine. La fermeture du dispositif selon US-A-4 319 146 se fait en deux temps, à savoir un pivotement du bras 29 puis la fermeture du couvercle 7.

Le but principal de la présente invention est de proposer un système de verrouillage du carter qui permette de condamner l'ouverture du carter par l'utilisateur tant que les pièces de la machine sont en mouvement.

Un autre objectif de l'invention est d'interdire la mise en fonctionnement de la machine tant que le carter n'est pas verrouillé.

Le dispositif de verrouillage selon l'invention présente également l'avantage de pouvoir être mis en place très facilement et à moindre coût sur des machines existantes possédant un carter de protection, et comporte des caractéristiques de la revendication 1.

Le dispositif de verrouillage selon l'invention permet donc d'empêcher la mise en marche de la machine, tant que le carter n'est pas fermé et verrouillé et de ne permettre l'ouverture du carter par l'utilisateur qu'après une durée prédéterminée, réglée de manière à ce que les pièces protégées par le carter ne présentent plus de danger pour l'utilisateur.

Selon une version préférée de l'invention, un moyen de visualisation de l'état de verrouillage est situé à l'extérieur du carter.

Le moyen de visualisation permet d'indiquer à l'utilisateur l'état verrouillé ou déverrouillé du carter.

Selon une version avantageuse de l'invention, le circuit électronique comporte une bascule permettant, lors de coupure d'électricité, de commuter le circuit en position d'arrêt de la machine, des moyens réglables connectés au circuit permettant de ne pas déclencher la bascule lors de micro-coupures de courant d'une durée prédéterminée.

Une coupure de courant a donc grâce à la bascule le même effet que l'arrêt volontaire de la machine par l'utilisateur et déclenche donc la temporisation permettant de déverrouiller le carter après un laps de temps. En cas de micro-coupures de courant, la bascule ignore le phénomène et la machine reste en position de fonctionnement, le carter restant verrouillé.

L'invention a également pour objet une machine comportant des parties dangereuses protégées par un carter, caractérisée en ce qu'un dispositif de verrouillage selon l'invention est installé sur la machine et est raccordé aux commandes de mise en marche et d'arrêt de la machine.

L'invention permet d'adopter à moindre coût un dispositif de verrouillage du carter aux machines existantes.

D'autres particularités et avantages de l'invention apparaîtront encore dans la description ci-après.

Aux dessins annexés donnés à titre d'exemples non limitatifs:
- la figure 1 est une vue en plan d'un carter ouvert équipé du dispositif de verrouillage selon l'invention ;
- la figure 2 est une vue en plan d'un carter fermé et verrouillé par le dispositif de verrouillage selon l'invention ;
- la figure 3 est une vue du circuit électrique raccordant les commandes de fonctionnement de la machine et le dispositif de verrouillage selon l'invention ; et
- la figure 4 est une vue en élévation d'un carter fermé équipé d'un dispositif de verrouillage selon une autre réalisation de l'invention.

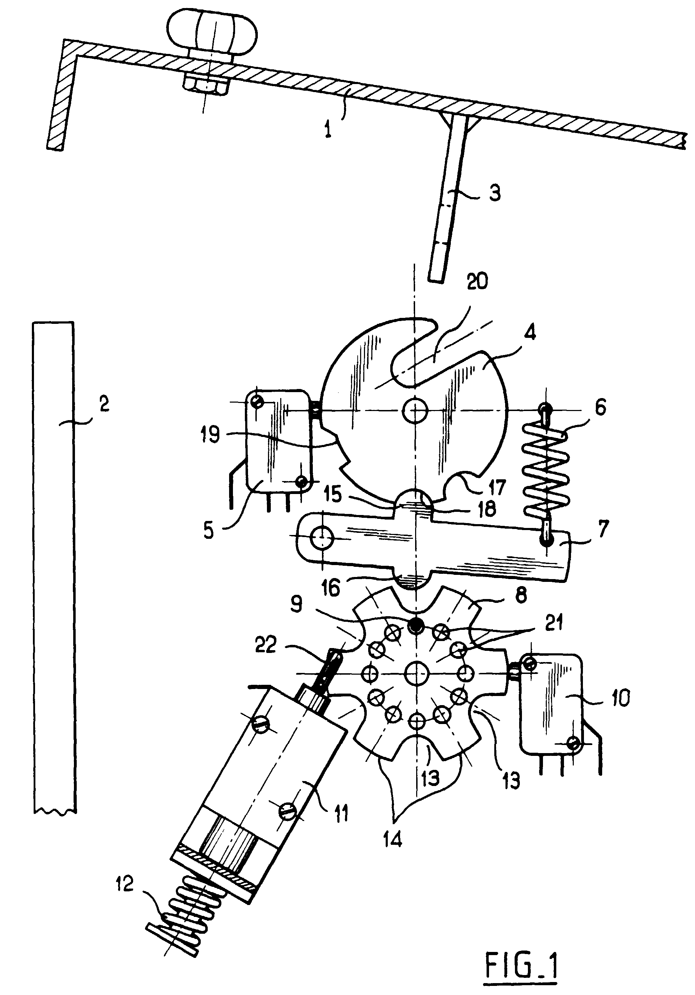

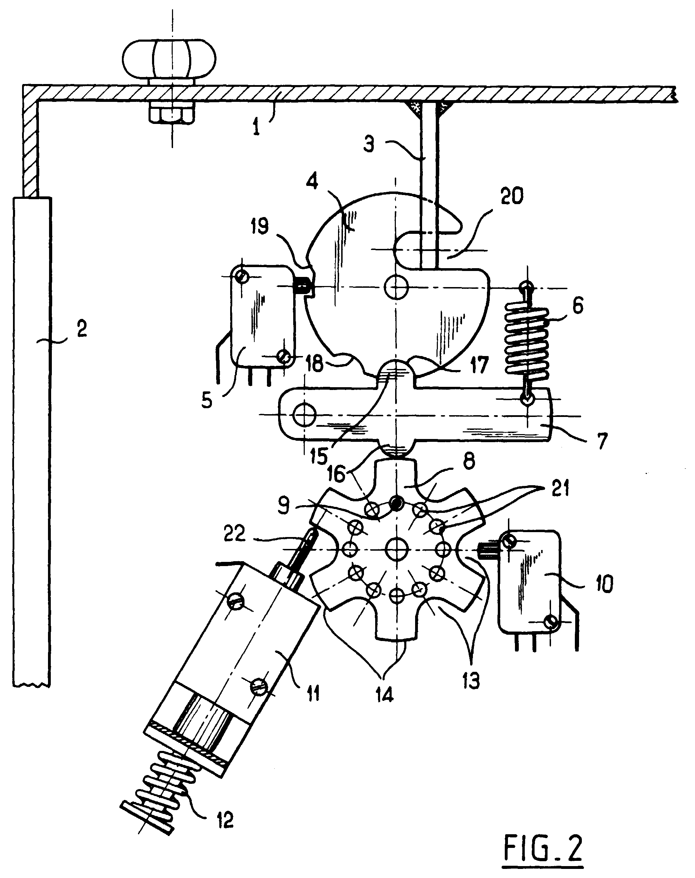

Conformément aux figures 1 et 2, un carter 1 est monté sur le bâti 2 d'une machine.

Le moyen de fermeture du carter 1 comprend un pêne 3 solidaire du carter 1, une came 4 mobile autour d'un axe possédant une entaille 20 dans laquelle le pêne 3 vient s'enclencher. La came de fermeture 4 possède également deux encoches 17 et 18 sur sa périphérie, dans lesquelles se loge une protubérance 15 située sur un levier 7 pivotant autour d'une première extrémité fixe.

La protubérance 15 est maintenue en contact avec les encoches 17 et 18 grâce à un ressort 6 qui a une extrémité fixe et une extrémité reliée à l'extrémité libre du levier 7.

Un détecteur 5 est placé en regard de la came de fermeture 4 qui possède une troisième encoche 19 située de telle manière que le micro-contact du détecteur 5 est laissé libre dans l'encoche 19 lorsque le carter 1 est fermé et le micro-contact est enfoncé par le bord de la came de fermeture 4 lorsque le carter 1 est ouvert.

Le moyen de verrouillage est une came 8 rotative autour d'un axe possédant une série d'encoches 13 régulièrement réparties à sa périphérie, les parties de la came 8 situées entre les encoches 13 formant une série de dents 14.

Les différentes positions de la came de verrouillage 8 sont déterminées par un index de maintien 9 qui vient se loger dans des évidements 21 situés sur les droites reliant les milieux des dents 14 et des encoches 13 au centre de la came de verrouillage 8. Un pas de rotation de la came de verrouillage 8 correspond à l'angle formé par deux droites consécutives.

Le levier 7 possède une deuxième protubérance 16 en regard de la came de verrouillage 8.

La came de verrouillage 8 est placée de telle sorte que suivant sa position, la deuxième protubérance 16 du levier 7 est en contact avec le milieu d'une dent 14 de la came 8 ou est laissé libre grâce à une encoche 13 de la came de verrouillage 8.

Ainsi, lorsque l'utilisateur ferme le carter 1, le pêne 3 vient s'enclencher dans l'entaille 20 en obligeant la came de fermeture 4 à pivoter de sorte que la première protubérance 15 du levier 7 vient se loger dans une encoche 17.

Le système de fermeture est verrouillé lorsque la came de verrouillage 8 a une dent 14 en contact avec la deuxième protubérance 16 du levier 7. Le levier 7 est ainsi coincé entre les deux cames 4 et 8 et ne peut plus pivoter. L'utilisateur ne peut donc pas ouvrir le carter 1.

Lorsque la came de verrouillage 8 tourne d'un pas, une encoche 13 est placée en regard de la deuxième protubérance 16 du levier 7. Le levier 7 est donc libre de pivoter. Lorsque l'utilisateur tire le carter 1 pour l'ouvrir, il tire le pêne 3 qui entraîne en rotation la came de fermeture 4 grâce à l'entaille 20 où le pêne est enclenché, le levier 7 pivotant également pour se loger dans la seconde encoche 18 de la came de fermeture 4. Le ressort 6 retient l'extrémité libre du levier 7 pour éviter à la première protubérance 15 de sortir de l'encoche 18.

Selon l'invention, le système de verrouillage est complété par un détecteur 10 de l'état de verrouillage 10 qui comporte un micro-contact qui est enfoncé par une dent 14 de la came de verrouillage 8 en position déverrouillée et laissé libre dans une encoche 13 en position verrouillée.

Un électro-aimant 11 possède une tige 22 qui, à chaque impulsion de l'électro-aimant 11, se déplace d'une course égale à un pas de rotation de la came de verrouillage 8 et est rappelée à sa position initiale par un ressort 12. L'électro-aimant 11 est placé de telle sorte que la tige 22 à chaque impulsion pousse une dent 14 de la came de verrouillage 8 pour faire tourner celle-ci d'un pas de rotation.

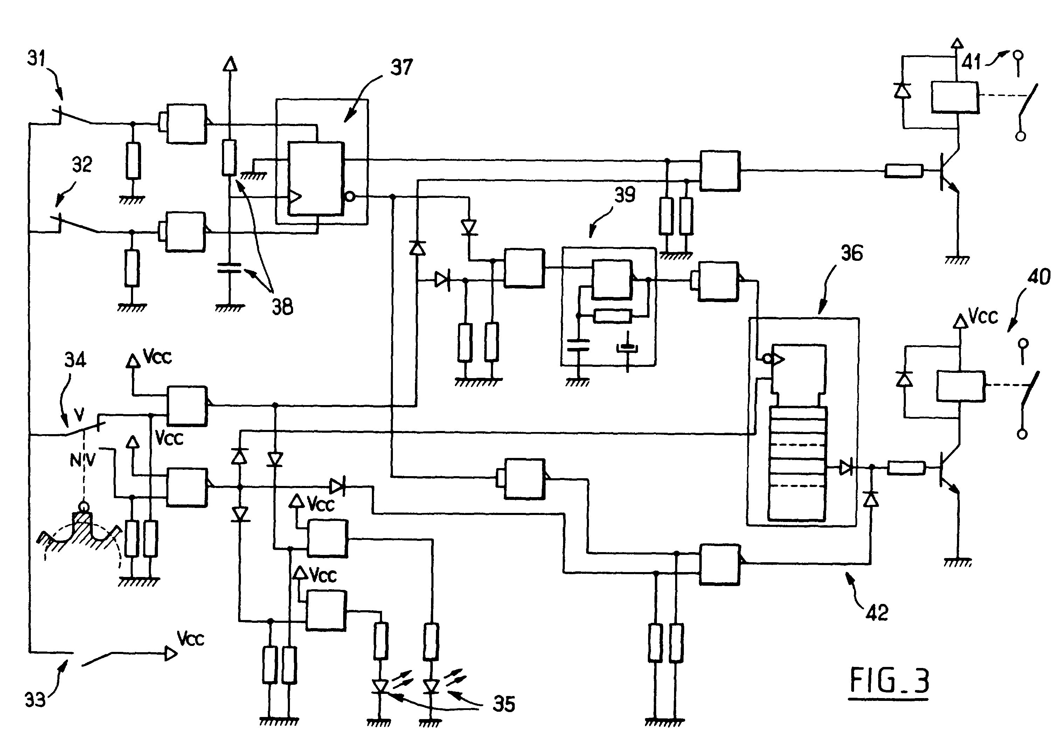

Le dispositif ainsi décrit est intégré dans un circuit électronique représenté à la figure 3 qui permet de connecter les commandes de marche 31 et d'arrêt 32 de la machine, au détecteur de position du carter représenté par l'interrupteur 33 et au détecteur de l'état de verrouillage représenté par l'interrupteur 34. Le courant permettant de déclencher l'impulsion de l'électro-aimant 11 provient du conducteur 42.

Le circuit comporte un circuit de temporisateur comportant une horloge 39 et un compteur binaire 36 qui permet de régler, au montage du dispositif sur la machine, le temps de temporisation souhaité.

Le temps de temporisation est fixé en fonction des pièces à protéger. Le carter 1 ne doit pouvoir s'ouvrir que lorsque les pièces qu'il protège ne présentent plus de danger pour l'utilisateur.

Pour des pièces en mouvement, le temps de temporisation tiendra compte de l'inertie des masses et du freinage et est calibré suivant le temps d'arrêt complet des pièces en mouvement.

Une bascule 37 permet de positionner le circuit en position d'arrêt lors des coupures de courant. Un circuit 38 permet de régler la durée des micro-coupures de courant au-dessous de laquelle la bascule 37 ne commute pas le circuit en position d'arrêt.

Les diodes luminescentes 35 permettent de visualiser l'état de verrouillage du carter. Elles peuvent être connectées à un moyen de visualisation extérieur au carter 1 pour indiquer à l'utilisateur l'état de verrouillage.

Lorsque l'utilisateur appuie sur le bouton de mise en marche 31 sans avoir fermé le carter 1, l'interrupteur 33 est fermé et le courant est donc court-circuité. Lorsque le carter 1 est fermé, l'interrupteur 33 est ouvert et le courant est transmis à l'interrupteur 34.

L'interrupteur 34 en position déverrouillée (nv) conduit le courant dans le conducteur 42 pour déclencher une impulsion de l'électro-aimant 11.

La came 8 tourne d'un pas et le carter 1 est verrouillé. Le micro-contact du détecteur 10 est décomprimé dans une encoche 13 et l'interrupteur 34 est commuté dans la position verrouillée (v). Le courant peut alors alimenter le moteur 41.

Lorsque l'utilisateur appuie sur le bouton d'arrêt 32 de la machine, le moteur 41 s'arrête et le courant passe dans le circuit de temporisation (39, 36). Une fois la temporisation écoulée, le courant peut passer dans le conducteur 42 et déclencher une nouvelle impulsion de l'électro-aimant 11, ce qui fait tourner la came 8 d'un pas et déverrouille le système de fermeture.
L'interrupteur 34 est alors replacé sur la position non-verrouillée (nv).

Lorsque l'utilisateur ouvre le carter, l'interrupteur 33 se ferme.

Ce dispositif de verrouillage permet donc de maintenir le carter verrouillé tant que les pièces sont dangereuses pour l'utilisateur et interdit la mise en marche de la machine si le carter n'est pas fermé et verrouillé.

Le dispositif permet également en cas de coupure intempestive de courant de faire basculer le circuit en position d'arrêt de la machine. La temporisation est donc mise en marche. L'impulsion de l'électro-aimant pour déverrouiller le carter 1 ne pourra se faire qu'au retour du courant.

En cas de micro-coupure généralement calibrée à 3 secondes, la bascule 37 ne prend pas en compte le phénomène et le carter 1 reste verrouillé.

La disposition des différents éléments du circuit permet d'assurer le maximum de sécurité pour l'utilisateur même en cas de défaillance de certains éléments du dispositif selon l'invention.

Ainsi, si l'électro-aimant 11 tombe en panne à la mise en marche de la machine, il n'y a pas de verrouillage, le micro-contact du détecteur 10 constate donc que le carter 1 n'est pas verrouillé et le moteur 41 n'est pas mis en marche.

Si l'électro-aimant 11 tombe en panne lorsqu'on arrête la machine, il n'y a pas de déverrouillage. Il faut alors démonter le carter 1 manuellement, si un des composants de la temporisation est défaillant, l'arrêt de la machine ne déclenche pas la temporisation, donc le carter 1 reste verrouillé. On peut alors intervenir sur l'électro-aimant 11, grâce à une prise prévue à cet effet, avec une batterie de 24 V pour provoquer l'impulsion de l'électro-aimant 11 et déverrouiller le carter 1.

Les micro-contacts sont de préférence montés en contact positif c'est-à-dire que l'arrêt du contact se fait par "non contact forcé" par une came. Le contact s'établit par pression des ressorts internes des micro-contacts. On évite ainsi les risques de collage éventuels des contacteurs par l'arrêt de la machine.

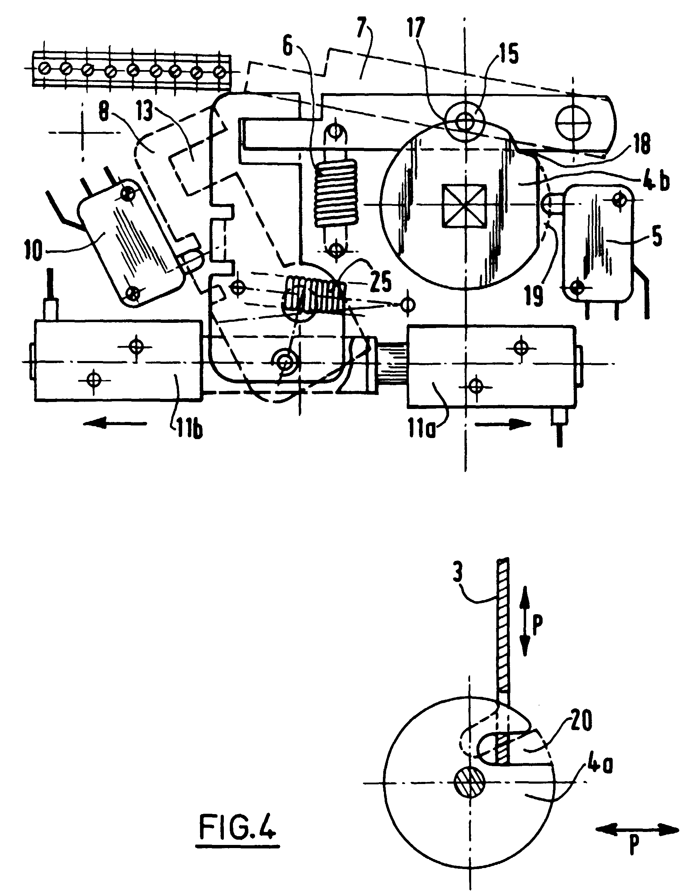

Une autre réalisation du dispositif selon l'invention est représentée à la figure 4.

Le moyen de fermeture comporte un première came de fermeture 4a mobile autour d'un axe de rotation comprenant à sa périphérie une entaille 20 dans laquelle peut s'enclencher un pène 3 solidaire du carter, la première came de fermeture 4a étant solidaire d'une seconde came de fermeture 4b mobile autour dudit axe de rotation et comprenant à sa périphérie deux encoches 17, 18.

Un levier 7 pivote autour d'une première extrémité et comporte une première protubérance 15 se logeant dans l'une 18 ou l'autre 17 encoche selon respectivement la position ouverte ou fermée du carter, un ressort 6 étant relié à la seconde extrémité du levier pour maintenir la protubérance 15 dans l'une 18 ou l'autre 17 encoche.

Les deux cames de fermeture 4a, 4b sont ainsi liées en rotation.

Cette réalisation permet de bien séparer l'action manuelle de fermeture, réalisée grâce au pène 3 introduit dans l'entaille 20 de la première came de fermeture 4a, du reste du dispositif qui peut être ainsi placé dans un boîtier étanche insensible à l'environnement, traversé seulement par l'axe de rotation reliant les deux cames de fermeture 4a, 4b.

De plus, on peut introduire le pène 3 dans l'entaille 20 selon deux directions P perpendiculaires l'une par rapport à l'autre. Il suffit, au montage, de choisir la disposition de la première came de fermeture 4a par rapport à la seconde came de fermeture 4b afin de monter l'ensemble du dispositif sur le bâti dans la meilleure position pour la fermeture du carter. La première came de fermeture 4a peut donc être tournée d'un quart de tour par rapport à la seconde came de fermeture 4b.

Le moyen de verrouillage comprend une came de verrouillage 8 possédant une encoche 13 adaptée à loger ladite seconde extrémité des lèvres 7 en position verrouillée (représentée en trait plein).

Le déplacement de la came de verrouillage 8 est réalisé grâce à deux électro-aimants 11a, 11b. L'un 11a des électro-aimants est adapté à chaque impulsion à placer la came de verrouillage 8 en position déverrouillée (en pointillés) et l'autre 11b des électro-aimants est adapté à chaque impulsion à placer la came de verrouillage 8 en position verrouillée.

L'électro-aimant 11a associé au déverrouillage a un fonctionnement temporisé, ce qui permet de programmer le déverrouillage après un certain laps de temps après la commande d'arrêt de la machine.

Par contre, l'autre électro-aimant 11b associé au verrouillage du carter fonctionne en direct dès que l'ordre de mise en marche de la machine a été donné et que le carter 1 est bien fermé.

Les deux électro-aimants 11a, 11b commandent ainsi le pivotement de la came de verrouillage entre la position verrouillée et la position déverrouillée dans un mouvement de va-et-vient. Le maintien en position de la came de verrouillage 8 est effectué grâce à un ressort de traction 25.

Un détecteur 5 de l'état de fermeture est placé à proximité de la seconde came de fermeture 4b et a un micro-contact qui est comprimé par la came de fermeture 4b lorque le carter est ouvert et laissé libre dans l'encoche 19 de la came de fermeture 4b lorsque le carter 1 est fermé.

Le micro-contact du détecteur 10 de l'état de verrouillage fonctionne de même. Il est comprimé par la came de verrouilage 8 lorsque le carter 1 est déverrouillé et laissé libre lorsque la came de verrouillage 8 est en position verrouillée.

## Revendications

1. Dispositif de verrouillage d'un carter (1) empêchant temporairement l'accès à des parties dangereuses d'une machine, comportant un moyen de fermeture du carter (1), un moyen de verrouillage permettant de verrouiller le moyen de fermeture et un détecteur (5) de la position du carter (1) adapté à court-circuiter la commande de mise en marche (31) de la machine lorsque le carter (1) est ouvert, un détecteur (10) de l'état de verrouillage étant adapté à court-circuiter la commande de mise en marche (31) de la machine lorsque le carter (1) est déverrouillé et le moyen de verrouillage étant commandé par au moins un électro-aimant (11, 11a, 11b) dont les impulsions sont consécutives à la commande de mise en marche (31) en aval du détecteur de position (5) du carter (1) ou à la commande d'arrêt de la machine (32), caractérisé en ce que le moyen de fermeture comporte au moins une came de fermeture (4, 4a, 4b) mobile sous l'action d'un élément (3) solidaire du carter entre une position ouverte dans laquelle le carter est ouvert et une position fermée dans laquelle le carter est fermé et où l'élément (3) du carter est en prise avec un élément complémentaire (20) de la came (4), la came (4) étant maintenue dans sa position fermée par un élément formant levier (7) sollicité vers la came par un ressort (6), et en ce que le moyen de verrouillage comprend une came de verrouillage (8) mobile sous l'action d'au moins un électro-aimant (11, 11a, 11b) entre au moins une première position et une seconde position verrouillée dans laquelle ladite came de verrouillage (8) bloque l'élément formant levier (7) contre la came de fermeture (4) de manière à verrouiller le système de fermeture, et en ce qu'un circuit de temporisation (39, 36) permet de retarder d'une durée prédéterminée le déverrouillage après l'arrêt du moteur (41) de la machine.

2. Dispositif de verrouillage selon la revendication 1, caractérisé en ce que le détecteur de position (5) du carter détecte la position de la came de fermeture (4).

3. Dispositif de verrouillage selon la revendication 1 ou 2, caractérisé en ce que le détecteur (10) de l'état de verrouillage détecte la position de la came de verrouillage (8).

4. Dispositif conforme à l'une des revendications 1 à 3, caractérisé en ce que le moyen de fermeture comporte une came de fermeture (4) mobile autour d'un axe comprenant à sa périphérie deux encoches (17, 18) et une entaille (20) dans laquelle peut s'enclencher un pêne (3) solidaire du carter (1) formant ledit élément du carter (1), un levier (7) pivotant autour d'une première extrémité et comportant une première protubérance (15) se logeant dans l'une (18) ou l'autre (17) encoche selon respectivement la position ouverte ou fermée du carter (1), et un ressort (6) fixe relié à la seconde extrémité du levier (7) pour maintenir ladite protubérance (15) dans l'une (18) ou l'autre (17) encoche.

5. Dispositif conforme à la revendication 4, caractérisé en ce que le moyen de verrouillage comprend une came de verrouillage (8) rotative autour d'un axe et possédant une série d'encoches (13) régulièrement réparties à sa périphérie, les parties de la came situées entre les encoches (13) formant une série de dents (14).

6. Dispositif conforme à la revendication 5, caractérisé en ce que la came de verrouillage (8) possède des évidements (21) dans lesquels se loge un index de maintien (9) en position de la came de verrouillage (8), lesdits évidements (21) étant situés sur les droites reliant les milieux des dents (14) et des encoches (13) au centre de la came de verrouillage (8), l'angle formé par deux droites consécutives étant égal à un pas de rotation de la came de verrouillage (8).

7. Dispositif conforme à l'une des revendications 1 à 6, caractérisé en ce que l'électro-aimant (11) possède une tige (22), ladite tige (22) étant adaptée pour pousser d'un pas, à chaque impulsion de l'électro-aimant (11), une dent (14) de la came de verrouillage (8), et étant ramenée à sa position initiale par un ressort de rappel (12).

8. Dispositif conforme à l'une des revendications 1 à 7, caractérisé en ce que le levier (7) comporte une deuxième protubérance (16) adaptée pour être en contact avec le milieu d'une dent (14) de la came de verrouillage (8) en position verrouillée du carter (1) et pour être en regard d'une encoche (13) en position déverrouillée.

9. Dispositif conforme à l'une des revendications 1 à 3, caractérisé en ce que le moyen de fermeture comporte une première came de fermeture (4a) mobile autour d'un axe de rotation comprenant à sa périphérie une entaille (20) dans laquelle peut s'enclencher un pêne (3) solidaire du carter (1) formant ledit élément du carter (1), ladite première came de fermeture (4a) étant solidaire d'une seconde came de fermeture (4b) mobile autour dudit axe de rotation et comprenant à sa périphérie deux encoches (17, 18), et en ce qu'un levier (7) pivote autour d'une première extrémité et comporte une première protubérance (15) se logeant dans l'une (18) ou l'autre (17) encoche selon respectivement la position ouverte ou fermée du carter (1), un ressort (6) étant relié à la seconde extrémité du levier (7) pour maintenir ladite protubérance (15) dans l'une (18) ou l'autre (17) encoche.

10. Dispositif conforme à la revendication 9, caractérisé en ce que le moyen de verrouillage comprend une came de verrouillage (8) possédant une encoche (13) adaptée à loger ladite seconde extrémité du levier (7) en position verrouillée.

11. Dispositif conforme à la revendication 10, caractérisé en ce qu'il comprend deux électro-aimants (11a, 11b), l'un (11a) des électro-aimants étant adapté à chaque impulsion à placer la came de verrouillage (8) en position déverrouillée et l'autre (11b) des électro-aimants étant adapté à chaque impulsion à placer la came de verrouillage (8) en position verrouillée.

12. Dispositif conforme à l'une des revendications 1 à 11, caractérisé en ce que le détecteur (5) de la position de la came de fermeture (4) est un micro-contact qui est comprimé par une came de fermeture (4, 4b) en position ouverte du carter et décomprimé en position fermée du carter (1) grâce à une troisième encoche (19) réalisée à la périphérie de la came de fermeture (4, 4b).

13. Dispositif conforme à l'une des revendications 1 à 12, caractérisé en ce que le détecteur (10) de l'état de verrouillage est un micro-contact adapté à être comprimé par une dent (14) de la came de verrouillage (8) en position déverrouillée et décomprimé dans une encoche (13) périphérique de la came de verrouillage (8) en position verrouillée.

14. Dispositif conforme à l'une des revendications 1 à 13, caractérisé en ce qu'un moyen de visualisation de l'état de verrouillage est situé à l'extérieur du carter (1).

15. Dispositif conforme à l'une des revendications 1 à 14, caractérisé en ce que le circuit de temporisation comprend un compteur binaire (36) permettant de régler la durée de la temporisation.

16. Dispositif conforme à l'une des revendications 1 à 15, caractérisé en ce que un circuit électronique comporte une bascule (37) adaptée à commuter le circuit en position d'arrêt de la machine lors de coupure d'électricité, des moyens réglables (38) connectés au circuit permettant de ne pas déclencher la bascule (37) lors de micro-coupures de courant d'une durée prédéterminée.

17. Machine comportant des parties dangereuses protégées par un carter (1), caractérisé en ce qu'elle comporte un dispositif de verrouillage dudit carter (1) conforme à l'une des revendications 1 à 16, connecté aux commandes de mise en marche (31) et d'arrêt (32) de la machine.

## Patentansprüche

1. Verriegelungsvorrichtung für ein Gehäuse (1), welches vorübergehend den Zugang zu gefährlichen Teilen einer Maschine verhindert, mit einem Verschlußmittel für das Gehäuse (1), einem Verriegelungsmittel, mit dem das Verschlußmittel verriegelt werden kann und einem Positionsgeber (5) für das Gehäuse (1), der geeignet ist, die Anlaßsteuerung (31) der Maschine kurzzuschließen, wenn das Gehäuse (1) offen ist, wobei ein Detektor (10) zur Prüfung des Verriegelungszustands geeignet ist, die Anlaßsteuerung (31) kurzzuschließen, wenn das Gehäuse (1) entriegelt ist und wobei das Verriegelungsmittel von mindestens einem Elektromagneten (11, 11a, 11b) gesteuert wird, dessen Impulse durch die Anlaßsteuerung (31) unterhalb des Positionsgebers (5) des Gehäuses (1) oder durch die Abstellsteuerung (32) der Maschine verursacht werden, dadurch gekennzeichnet, daß das Verschlußmittel mindestens einen Verschlußnocken (4, 4a, 4b) aufweist, welcher unter Einwirkung eines mit dem Gehäuse fest verbundenen Elements (3) beweglich ist zwischen einer ist offenen Position, in der das Gehäuse offen ist, und einer geschlossenen Position, in der das Gehäuse geschlossen ist und das Element (3) des Gehäuses mit einem Ergänzungselement (20) des Nockens (4) in Eingriff ist, wobei der Nocken (4) durch ein Hebelelement (7), welches durch eine Feder (6) in Richtung des Nockens beansprucht ist, in seiner geschlossenen Position gehalten wird, und daß das Verschlußmittel einen Verriegelungsnocken (8) umfaßt, welcher unter Einwirkung mindestens eines Elektromagneten (11, 11a, 11b) beweglich ist zwischen mindestens einer ersten Position und einer geschlossenen zweiten Position, in der der Verriegelungsnocken (8) das Hebelelement (7) an dem Verschlußnocken (4) festlegt, so daß das Verschlußsystem verriegelt wird und daß durch einen Verzögerungskreis (39, 36) die Entriegelung nach Abstellen des Motors (41) der Machine um eine vorbestimmte Zeit verzögert werden kann.

2. Verriegelungsvorrichtung nach Anspruch 1, dadurch gekennzeichnet, daß der Positionsgeber (5) des Gehäuses die Position des Verschlußnockens (4) ermittelt.

3. Verriegelungsvorrichtung nach Anspruch 1 oder 2, dadurch gekennzeichnet, daß der Detektor (10) zur Prüfung des Verriegelungszustands die Position des Verriegelungsnockens (8) ermittelt.

4. Vorrichtung nach einem der Ansprüche 1 bis 3, dadurch gekennzeichnet, daß das Verschlußmittel einen um eine Achse beweglichen Verschlußnocken (4) enthält, der an seinem Umfang zwei Vertiefungen (17, 18) und eine Einkerbung (20) aufweist, in welche ein mit dem Gehäuse (1) fest verbundener, das Element des Gehäuses (1) bildender Riegel (3) einrasten kann, wobei ein sich um ein erstes Ende drehender und einen ersten Vorsprung (15) aufweisender Hebel (7) sich in die eine (18) oder andere (17) Vertiefung einlegt, je nachdem, ob sich das Gehäuse (1) in offener oder geschlossener Position befindet und wobei eine feststehende Feder (6) mit dem zweiten Ende des Hebels (7) verbunden ist, um den Vorsprung (15) in der einen (18) oder anderen (17) Vertiefung zu halten.

5. Vorrichtung nach Anspruch 4, dadurch gekennzeichnet, daß das Verriegelungsmittel einen Verriegelungsnocken (8) enthält, der sich um eine Achse dreht und an seinem Umfang mit einer Reihe von regelmäßig verteilten Vertiefungen (13) versehen ist, wobei die zwischen den Vertiefungen (13) gelegenen Bereiche des Nockens eine Reihe von Zähnen (14) bilden.

6. Vorrichtung nach Anspruch 5, dadurch gekennzeichnet, daß der Verriegelungsnocken (8) Aussparungen (21) aufweist, in die sich ein Positionshaltezeiger (9) des Verriegelungsnockens (8) einlegt, wobei die Aussparungen (21) auf den Geraden liegen, die die Mitte der Zähne (14) und der Vertiefungen (13) mit dem Zentrum des Verriegelungsnockens (8) verbinden, wobei der durch zwei aufeinanderfolgende Geraden gebildete Winkel einer Rotationsteilung des Verriegelungsnockens (8) entspricht.

7. Vorrichtung nach einem der Ansprüche 1 bis 6, dadurch gekennzeichnet, daß der Elektromagnet (11) einen Stift (22) aufweist, wobei der Stift (22) so ausgeführt ist, daß er bei jedem Impuls des Elektromagneten einen Zahn (14) des Verriegelungsnockens (8) um eine Teilung vorschiebt und durch eine Rückstellfeder (12) wieder in seine Ausgangsposition zurückgeführt wird.

8. Vorrichtung nach einem der Ansprüche 1 bis 7, dadurch gekennzeichnet, daß der Hebel (7) einen zweiten Vorsprung (16) aufweist, der so ausgeführt ist, daß er bei verriegelter Position des Gehäuses (1) die Mitte eines Zahns (14) des Verriegelungsnockens (8) berührt und bei entriegelter Position einer Vertiefung (13) gegenüberliegt.

9. Vorrichtung nach einem der Ansprüche 1 bis 3, dadurch gekennzeichet, daß das Verschlußmittel einen um eine Rotationsachse drehbaren ersten Verschlußnocken (4a) enthält, der an seinem Umfang eine Einkerbung (20) aufweist, in welche ein mit dem Gehäuse (1) fest verbundener, das Element des Gehäuses (1) bildender Riegel (3) einrasten kann, wobei der erste Verschlußnocken (4a) fest mit einem zweiten Verschlußnocken (4b) verbunden ist, welcher um die Rotationsachse drehbar ist und an seinem Umfang zwei Vertiefungen (17, 18) aufweist und daß ein Hebel (7) um ein erstes Ende schwenkt und einen ersten Vorsprung (15) aufweist, welcher sich in die eine (18) oder andere (17) Vertiefung einlegt, je nachdem, ob sich das Gehäuse (1) in offener oder geschlossener Position befindet, wobei eine Feder (6) mit dem zweiten Ende des Hebels (7) verbunden ist, um den Vorsprung (15) in der einen (18) oder anderen Vertiefung zu halten.

10. Vorrichtung nach Anspruch 9, dadurch gekennzeichnet, daß das Verriegelungsmittel einen Verriegelungsnocken (8) enthält, der eine Vertiefung (13) aufweist, welche geeignet ist, das zweite Ende des Hebels (7) in verriegelter Position aufzunehmen.

11. Vorrichtung nach Anspruch 10, dadurch gekennzeichnet, daß sie zwei Elektromagneten (11a, 11b) umfaßt, wobei einer (11a) der Elektromagneten geeignet ist, den Verriegelungsnocken (8) bei jedem Impuls in die entriegelte Position zu bringen und der andere (11b) der Elektromagneten geeignet ist, den Verriegelungsnocken (8) bei jedem Impuls in die verriegelte Position zu bringen.

12. Vorrichtung nach einem der Ansprüche 1 bis 11, dadurch gekennzeichnet, daß der Positionsgeber (5) für den Verschlußnocken (4) ein Mikrokontakt ist, der bei offener Position des Gehäuses durch einen Verschlußnocken (4, 4b) komprimiert und bei geschlossener Position des Gehäuses (1) durch eine am Umfang des Verschlußnockens (4, 4b) ausgebildete dritte Vertiefung (19) dekomprimiert wird.

13. Vorrichtung nach einem der Ansprüche 1 bis 12, dadurch gekennzeichnet, daß der Detektor (10) zur Prüfung des Verriegelungszustands ein Mikrokontakt ist, der bei entriegelter Position durch einen Zahn (14) des Verriegelungsnockens (8) komprimierbar und bei verriegelter Position in einer umfangsseitigen Vertiefung (13) des Verschlußnockens (8) dekomprimierbar ist.

14. Vorrichtung nach einem der Ansprüche 1 bis 13, dadurch gekennzeichnet, daß sich außerhalb des Gehäuses (1) ein Mittel zur Sichtbarmachung des Verriegelungszustands befindet.

15. Vorrichtung nach einem der Ansprüche 1 bis 14, dadurch gekennzeichnet, daß der Verzögerungskreis einen Binärzähler (36) enthält, mit dem die Verzögerungszeit eingestellt werden kann.

16. Vorrichtung nach einem der Ansprüche 1 bis 15, dadurch gekennzeichnet, daß ein elektronischer Schaltkreis ein Kippglied (37) aufweist, das geignet ist, den Schaltkreis umzuschalten, wenn die Maschine bei Stromunterbrechung abgeschaltet ist, wobei an den Schaltkreis angeschlossene einstellbare Mittel (38) dafür sorgen, daß das Kippglied (37) bei Mikrostromunterbrechnungen vorbestimmter Dauer nicht ausgelöst wird.

17. Maschine mit gefährlichen, durch ein Gehäuse (1) geschützten Teilen, dadurch gekennzeichnet, daß sie eine Verriegelungsvorrichtung für das Gehäuse (1) nach einem der Ansprüche 1 bis 16 aufweist, die an die Anlaß-(31) und Abstellsteuerung (32) der Maschine angeschlossen ist.

## Claims

1. A device for locking a housing (1) temporarily inhibiting access to dangerous parts of the machine, including a means for closing the housing (1), a locking means making it possible to lock the closing means and a detector (5) of the position of the housing (1) suited for short-circuiting the machine start-up control (31) when the housing (1) is open, a locked state detector (10) being suited for short-circuiting the machine start-up control (31) when the housing is unlocked and the locking means being controlled by at least one electromagnet (11, 11a, 11b) whose pulses are consecutive upon the start-up control (31) downstream from the detector (5) of the position of the housing (1) or upon the machine shutdown control (32), characterised in that the closing means includes at least one closing cam (4, 4a, 4b) moveable, under the effect of a member (3) rigidly joined to the housing, between an open position in which the housing is open and a closed position in which the housing is closed and wherein the member (3) of the housing is engaged with a complementary member (20) of the cam (4), the cam (4) being maintained in its closed position by a lever forming member (7) pulled towards the cam by a spring (6), and in that the locking means comprises a locking cam (8) moveable, under the effect of at least one electromagnet (11, 11a, 11b), between at least a first position and a second locked position in which the locking cam (8) locks the lever forming member (7) against the closing cam (4) so as to lock the closing system, and in that a delay circuit (39, 36) makes it possible to delay the unlocking a predetermined amount of time after the shutdown of the motor (41) of the machine.

2. A locking device according to claim 1, characterised in that the housing position detector (5) detects the position of the closing cam (4).

3. A locking device according to claim 1 or 2, characterised in that the locked state detector (10) detects the position of the locking cam (8).

4. A device according to one of claims 1 to 3, characterised in that the closing means includes a closing cam (4), moveable about an axis, comprising on it periphery two notches (17, 18) and a slot (20) in which a bolt (3) rigidly joined to the housing (1), forming said member of the housing (1), can become engaged, a lever (7) pivoting about a first end and including a first protuberance (15) seating itself in one (18) or the other (17) of the notches depending on whether the housing (1) is in the open or closed position, respectively, and a fixed spring (6) connected to the second end of the lever (7) to maintain said protuberance (15) in one (18) or the other (17) of the notches.

5. A device according to claim 4, characterised in that the locking means comprises a locking cam (8), rotatable about an axis, having a series of notches (13) regularly distributed on its periphery, the parts of the cam located between the notches (13) forming a series of teeth (14).

6. A device according to claim 5, characterised in that the locking cam (8) has recesses (21) in which an index (9) for maintaining the locking cam (8) in position seats itself, said recesses (21) being located on the lines connecting the middle of the teeth (14) of the notches (13) to the centre of the locking cam (8), the angle formed by two consecutive lines being equal to one pitch of the rotation of the locking cam (8).

7. A device according to one of claims 1 to 6, characterised in that the electromagnet (11) has a rod (22), said rod (22) being suited for pushing, upon each pulse of the electromagnet (11), a tooth (14) of the locking cam (8) one pitch, and being returned to its initial position by a return spring (12).

8. A device according to one of claims 1 to 7, characterised in that the lever (7) includes a second protuberance (16) suited for being in contact with the middle of a tooth (14) of the locking cam (8) in the locked position of the housing (1) and for being opposite to a notch (13) in the unlocked position.

9. A device according to one of claims 1 to 3, characterised in that the closing means includes a first closing cam (4a), moveable about an axis of rotation, comprising on its periphery a slot (20) in which a bolt (3) rigidly joined to the housing (1), forming said member of the housing (1), can become engaged, said first closing cam (4a) being rigidly joined to a second closing cam (4b) moveable about said axis of rotation and comprising on its periphery two notches (17, 18), and in that a lever (7) pivots about a first end and includes a first protuberance (15) seating itself in one (18) or the other (17) of the notches depending on whether the housing (1) is in the open or closed position, respectively, a spring (6) being connected to the second end of the lever (7) to maintain said protuberance (15) in one (18) or the other (17) of the notches.

10. A device according to claim 9, characterised in that the locking means comprises a locking cam (8) having a notch (13) suited for seating said second end of the lever (7) in locked position.

11. A device according to claim 10, characterised in that it comprises two electromagnets (11a, 11b), one (11a) of the electromagnets being suited, upon each pulse, for placing the locking cam (8) in unlocked position and the other (11b) electromagnet being suited, upon each pulse, for placing the locking cam (8) in locked position.

12. A device according to one of claims 1 to 11, characterised in that the detector (5) of the position of the closing cam (4) is a microcontact which is compressed by a closing cam (4, 4b) in the open position of the housing and decompressed in the closed position of the housing (1) due to a third notch (19) provided on the periphery of the closing cam (4, 4b).

13. A device according to one of claims 1 to 12, characterised in that the locked state detector (10) is a microcontact suited for being compressed by a tooth (14) of the locking cam (8) in the unlocked position and decompressed within a peripheral notch (13) of the locking cam (8) in the locked position.

14. A device according to one of claims 1 to 13, characterised in that a means for displaying the locked state is located outside of the housing (1).

15. A device according to one of claims 1 to 14, characterised in that the delay circuit comprises a binary counter (36) making it possible to adjust the delay time.

16. A device according to one of claims 1 to 15, characterised in that an electronic circuit includes a tripping device (37) suited for switching the circuit to machine shutdown position upon a power cutoff, adjustable means (38) connected to the circuit making it possible to not trigger the tripping device (37) upon micro-power cut-offs of predetermined duration.

17. A machine including dangerous parts protected by a housing (1), characterised in that it includes a device for locking said housing (1) according to one of claims 1 to 16, connected to the machine start-up (31) and shutdown (32) controls.
